# EUROPÄISCHE PATENTSCHRIFT

(11) **EP 1 429 007 B1**
(45) Veröffentlichungstag und Bekanntmachung des Hinweises auf die Patenterteilung: **12.04.2006**
(21) Anmeldenummer: 03010882.3
(22) Anmeldetag: 15.05.2003
(51) Int. Cl.: F02D 21/08

(54) **Verfahren zum Einstellen einer Abgasrückführrate**
Method of controlling an EGR rate
Procédé de contrôle d'un taux de gaz d'échappement recirculé

(30) Priorität: 06.12.2002 DE 10257031
(43) Veröffentlichungstag der Anmeldung: 16.06.2004
(73) Patentinhaber: ROBERT BOSCH GMBH, 70442 Stuttgart (DE)
(72) Erfinder: Heinstein, Axel, 71299 Wimsheim (DE); Schlesiger, Oliver, 71679 Asperg (DE)

(56) Entgegenhaltungen:
- EP-A- 1 130 240
- WO-A-02/090746
- PATENT ABSTRACTS OF JAPAN Bd. 0082, Nr. 07 (M-327), 21. September 1984 (1984-09-21) & JP 59 093953 A (TOYOTA JIDOSHA KK), 30. Mai 1984 (1984-05-30)
- PATENT ABSTRACTS OF JAPAN Bd. 1995, Nr. 02, 31. März 1995 (1995-03-31) & JP 6 323201 A (MAZDA MOTOR CORP), 22. November 1994 (1994-11-22)

## Beschreibung

Die Erfindung bezieht sich auf ein Verfahren zum Einstellen einer Abgasrückführrate einer Brennkraftmaschine, bei dem ein Abgasrückführventil mittels eines auf dieses einwirkenden Stellglieds in Abhängigkeit von Anforderungen an die Brennkraftmaschine verstellt wird.

### Stand der Technik

Ein derartiges Verfahren zum Einstellen einer Abgasrückführrate ist in der DE 29 11 209 A1 als bekannt ausgewiesen. Bei diesem bekannten Verfahren wird zum Regeln einer Abgaszusammensetzung Abgas von einem Abgaskanal in ein Ansaugrohr unter Verstellung einer Mischklappe zurückgeführt, um eine optimale Abgaszusammensetzung einzuregeln. Nähere Angaben zur Ausbildung des Stellglieds für die Mischklappe sind nicht gemacht.

Der Erfindung liegt die Aufgabe zugrunde, ein Verfahren der eingangs genannten Art bereitzustellen, bei dem das Abgasrückführventil mittels des Stellglieds in an sich bekannter Weise in Stufen verstellt und die Abgasrückführrate optimiert wird.

### Vorteile der Erfindung

Die Aufgabe der Erfindung wird mit den Merkmalen des Anspruches 1 gelöst. Hiernach ist vorgesehen, dass die Abgasrückführrate in an sich bekannter Weise in Stufen grob auf einen Sollwert geregelt wird, und dass nach der Grobeinregelung eine Feinregelung durchgeführt wird, bei der festgestellt wird, ob die Abgasrückführrate eine vorgegebene Genauigkeit erreicht hat und eine Feineinstellung mittels Einwirkens auf eine Einlass- und/oder Auslassventiltätigkeit eines betreffenden Brennraumes erfolgt, falls die vorgegebene Genauigkeit nach der Grobregelung nicht erreicht ist.

Mit diesen Maßnahmen wird stets eine optimal an jeweilige Steuerbedingungen angepasste Abgasrückführung erreicht, selbst wenn das Abgasrückführventil in relativ groben Abstufungen einstellbar ist. Dadurch ist eine optimale Abstimmung der Rückführrate in Abhängigkeit der Anforderungen an die Brennkraftmaschine, wie z.B. optimale Abgaszusammensetzung oder optimales Drehmoment bei jeweiliger Drehzahl erreichbar. Ein verwendetes Stellglied besteht beispielsweise in einem Schrittmotor. Durch das Einwirken auf die Einlass- und/oder Auslassventiltätigkeit, beispielsweise durch Verstellen einer Nockenwelle oder an sich bekannter anderer Ventilbetätigungsvorrichtungen, wobei auch die Ventilhübe und/oder eine Ventilüberschneidung geeignet gesteuert oder geregelt werden können, wird die in dem Brennraum (und gegebenenfalls vor- oder nachgeordneten Kanalabschnitten) vorhandene interne Abgasrückführrate variiert. Dadurch wird eine Feinregulierung der gesamten Abgasrückführrate erzielt, die sich aus der internen und der externen, d.h. über einen Rückführkanal geleiteten Abgasrückführrate, zusammensetzt.

Zum Optimieren der Abgasrückführrate ist vorteilhaft vorgesehen, dass die Feineinstellung auf der Grundlage von in einer Steuereinrichtung ausgewerteten Motorsteuerdaten erfolgt. Die Motorsteuerdaten können dabei beispielsweise in einer Motorsteuereinrichtung vorliegen und/oder mittels geeigneter Sensoren erfasst werden.

Eine vorteilhafte Ausgestaltung des Verfahrens besteht beispielsweise darin, dass die Motorsteuerdaten erfasste Abgasmessdaten umfassen.

Eine weitere vorteilhafte Ausgestaltung des Verfahrens ergibt sich dadurch, dass die Anforderungen eine Optimierung eines Drehmoments, einer Abgaszusammensetzung oder einer Kombination daraus umfassen und dass bei Abweichung von dem optimalen Drehmoment und/oder der optimalen Abgaszusammensetzung infolge der Feineinstellung die Optimierung durch Ändern anderer Steuerparameter erfolgt.

### Zeichnung

Die Erfindung wird nachfolgend anhand von Ausführungsbeispielen unter Bezugnahme auf die Zeichnungen näher erläutert. Es zeigen:
- Fig. 1: eine schematische Darstellung einer Anordnung zum Einstellen einer Abgasrückführrate,
- Fig. 2: einen stufigen Verlauf von Einstellungen eines Abgasrückführventils und
- Fig. 3: ein Ablaufdiagramm zur Vorgehensweise beim Einstellen einer Abgasrückführrate.

### Ausführungsbeispiel

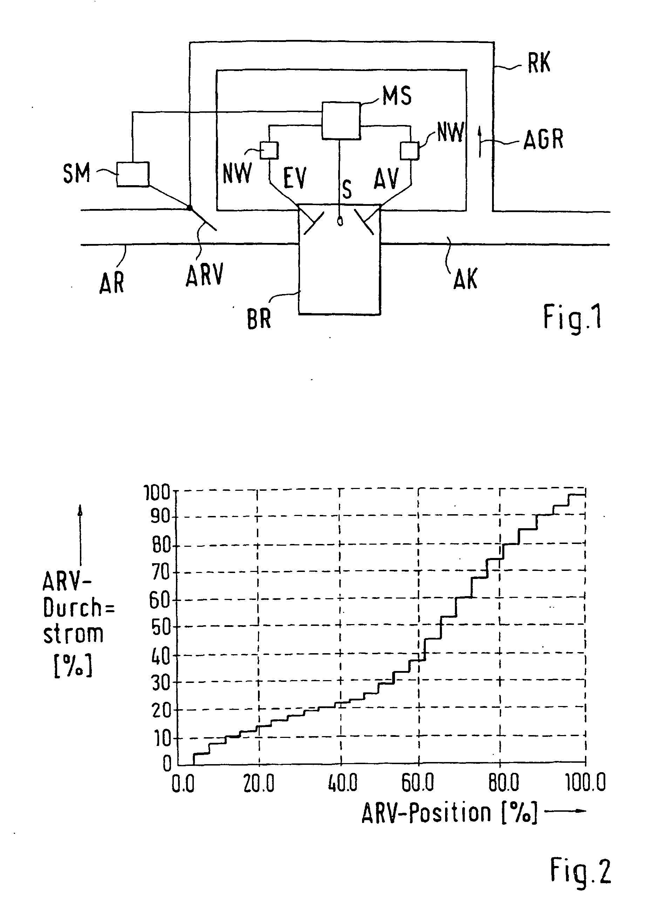

Fig. 1 zeigt einen Ausschnitt einer Brennkraftmaschine mit einem eingangsseitig an ein Ansaugrohr AR und ausgangsseitig an einen Abgaskanal AK angeschlossenen Brennraum BR. Von dem Abgaskanal AK führt ein Rückführkanal RK über ein steuerbares oder regelbares Abgasrückführventil ARV zurück zu dem Ansaugrohr AR, wie an sich beispielsweise aus der eingangs genannten DE 29 1 1 209 A1 bekannt. Das Abgasrückführventil ARV wird mittels eines Stellglieds in Form eines Stellmotors SM in Abhängigkeit von Anforderungen an die Brennkraftmaschine verstellt, wobei die Verstellsignale von einer Steuereinrichtung geliefert werden, die z.B. Teil einer Motorsteuerung MS ist, welche Motorsteuerdaten bereitstellt, die in ihr gespeichert sind oder generiert werden. Hierzu ist die Motorsteuerung geeignet programmiert und mit Eingangs- und Ausgangsanschlüssen versehen, so dass ihr z.B. auch geeignete Sensordaten von Sensoren S zugeführt werden können. Mittels der Motorsteuerung MS kann auch die Tätigkeit der Einlass- und Auslassventile EV, AV beispielsweise über eine verstellbare Nockenwelle NW oder entsprechende Betätigungselemente gesteuert oder geregelt werden, wie an sich bekannt. Hierbei lassen sich z.B. die Ventilhübe und/oder Ventilüberschneidungen steuern bzw. regeln. Als weiterer Parameter kann mittels der Motorsteuerung auch ein jeweiliger Zündzeitpunkt vorgegeben werden.

Wie Fig. 2 zeigt, wird mittels des Schrittmotors SM die Einstellung des Abgasrückführventils ARV und damit die Abgasrückführrate AGR stufig, d.h. in der Regel sehr grob in Abhängigkeit von der Schrittweite des Schrittmotors SM und eines vorhandenen Druckgefälles am Abgasrückführventil ARV variiert.

Die gesamte Abgasrückführrate setzt sich zusammen aus einer in dem Brennraum BR und gegebenenfalls auch in daran angeschlossenen Abschnitten des Ansaugrohres AR und des Abgaskanals AK vorhandenen internen Abgasrückführrate sowie einer über den Rückführkanal RK und das Abgasrückführventil ARV zurückgeleiteten externen Abgasrückführrate. Von der vorgegebenen Gesamtabgasrückführrate wird die interne Abgasrückführrate, die sich beispielsweise aus den aktuell vorliegenden Nockenwellenpositionen berechnet, abgezogen. Die so erhaltene Differenz dient als Sollwert für die externe Abgasrückführrate. Dieser Sollwert wird in einen Sollabgasmassenstrom und schließlich in eine Sollöffnung bzw. einen Sollöffnungwinkel des Abgasrückführventils ARV umgerechnet.

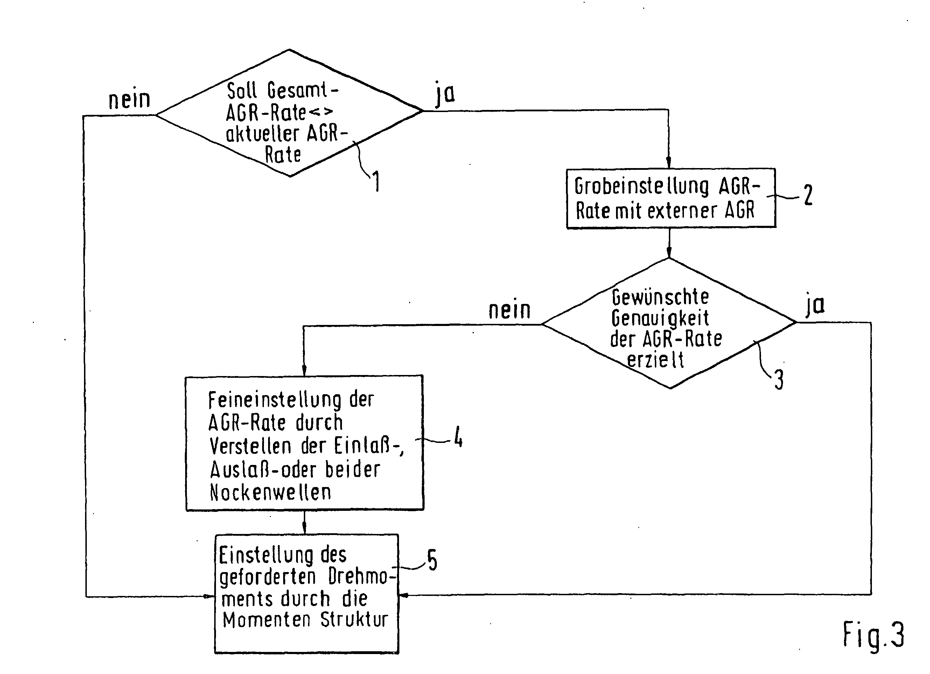

Fig. 3 zeigt die Vorgehensweise bei dem vorliegenden Verfahren zum Einstellen der Abgasrückführrate der Brennkraftschiene, wobei es sich um einen Otto-Motor oder einen Dieselmotor handeln kann. In einem ersten Schritt 1 wird ein Soll-Ist-Vergleich zwischen der Soll-Gesamtabgasrückführrate und der aktuellen Gesamtabgasrückführrate durchgeführt und bei Überschreiten einer Toleranzschwelle nach oben oder unten in einem zweiten Schritt 2 eine Grobeinstellung der Abgasrückführrate durch Verändern der externen Abgasrückführrate über entsprechende Einstellung des Abgasrücktührventils ARV mittels des Schrittmotors SM vorgenommen. In einem dritten Schritt 3 wird festgestellt, ob eine gewünschte bzw. vorgegebene Genauigkeit der Gesamtabgasrückführrate erzielt ist. Falls dies der Fall ist, werden mittels der Motorsteuerung MS die weiteren Einstellungen entsprechend den Anforderungen an die Brennkraftmaschine, beispielsweise das geforderte Drehmoment durch die Momentenstruktur eingestellt. Ist die gewünschte Genauigkeit der Abgasrückführrate im dritten Schritt 3 in Folge des grob quantisierten Abgasrnassenstroms nicht erreicht, wird in einem vierten Schritt 4 eine Feineinstellung der gesamten Abgasrückführrate durch Regulieren der internen Abgasrückführrate mittels Verstellens der Einlass- und/oder Auslass-Ventiltätigkeit durchgeführt. Dies geschieht beispielsweise durch Verstellen der Einlass- und/oder Auslass-Nockenwelle NW. Liegt nach Abschluss der Feineinstellung durch entsprechende Regelung mit der Steuereinrichtung die gesamte Abgasrückführrate AGR innerhalb eines vorgegebenen Toleranzbereiches der Feineinstellung, werden die weiteren Einstellungen des Motors über die Motorsteuereinrichtung MS in Abhängigkeit von den jeweiligen Anforderungen an die Brennkraftmaschine, wie z.B. die Einstellung des geforderten Drehmoments durch die Momentenstruktur vorgenommen. Eine Optimierung kann auch im Hinblick auf eine optimale Abgaszusammensetzung oder eine Kombination mehrerer Anforderungen erfolgen. Liegt die aktuelle gesamte Abgasrückführrate AGR im ersten Schritt 1 bereits im Sollbereich, erübrigt sich ein neues Einstellen der Abgasrückführrate und es wird unmittelbar auf den fünften Schritt 5 zum Einstellen in Abhängigkeit von den Anforderungen an die Brennkraftmaschine übergegangen.

Mit der beschriebenen Vorgehensweise wird insbesondere bei Systemen mit Schrittmotoren eine optimale Einstellung der Abgasrückführrate einer Brennkraftmaschine erreicht.

## Patentansprüche

1. Verfahren zum Einstellen einer Abgasrückführrate (AGR) einer Brennkraftmaschine, bei dem ein Abgasrückführventil (ARV) mittels eines auf dieses einwirkenden Stellglieds in Abhängigkeit von Anforderungen an die Brennkraftmaschine verstellt wird,
**dadurch gekennzeichnet,**
**dass** die Abgasrückführrate (AGR) in an sich bekannter Weise in Stufen grob auf einen Sollwert geregelt wird,
**dass** nach der Grobeinregelung eine Feinregelung durchgeführt wird, bei der festgestellt wird, ob die Abgasrückführrate (AGR) eine vorgegebene Genauigkeit erreicht hat und eine Feineinstellung mittels Einwirkens auf eine Einlass- und/oder Auslassventiltätigkeit eines betreffenden Brennraumes (BR) erfolgt, falls die vorgegebene Genauigkeit nach der Grobregelung nicht erreicht ist.

2. Verfahren nach Anspruch 1,
**dadurch gekennzeichnet,**
**dass** die Feineinstellung auf der Grundlage von in einer Steuereinrichtung ausgewerteten Motorsteuerdaten erfolgt.

3. Verfahren nach Anspruch 2,
**dadurch gekennzeichnet,**
**dass** die Motorsteuerdaten erfasste Abgasmessdaten umfassen.

4. Verfahren nach einem der vorhergehenden Ansprüche,
**dadurch gekennzeichnet,**
**dass** die Anforderungen eine Optimierung eines Drehmoments, einer Abgaszusammensetzung oder einer Kombination daraus umfassen und
**dass** bei Abweichung von dem optimalen Drehmoment und/oder der optimalen Abgaszusammensetzung infolge der Feineinstellung die Optimierung durch Ändern anderer Steuerparameter erfolgt.

## Revendications

1. Procédé de réglage d'un taux de recirculation des gaz d'échappement (AGR) d'un moteur à combustion interne, dans lequel une soupape de recirculation des gaz d'échappement (ARV) est réglée au moyen d'un actionneur agissant sur celle-ci en fonction d'exigences imposées au moteur à combustion interne,
**caractérisé en ce que**
le taux de recirculation des gaz d'échappement (AGR) est réglé grossièrement par paliers, de manière connue en soi, sur une valeur de consigne,
après le réglage grossier, on effectue un réglage de précision, au cours duquel on détermine si le taux de recirculation des gaz d'échappement (AGR) a atteint une précision prédéterminée, et on effectue un ajustement de précision au moyen d'une action sur une activité de soupape d'admission et/ou de soupape d'échappement d'une chambre de combustion concernée (BR), dans le cas où la précision prédéterminée n'est pas atteinte après le réglage grossier.

2. Procédé selon la revendication 1,
**caractérisé en ce que**
l'ajustement de précision s'effectue sur la base de données de commande du moteur exploitées dans un dispositif de commande.

3. Procédé selon la revendication 2,
**caractérisé en ce que**
les données de commande du moteur comprennent des données de mesure des gaz d'échappement enregistrées.

4. Procédé selon l'une des revendications précédentes,
**caractérisé en ce que**
les exigences imposées au moteur comprennent une optimisation du couple, une composition des gaz d'échappement ou une combinaison de ces éléments, et
en cas d'écart avec le couple optimal et/ou la composition optimale des gaz d'échappement à la suite de l'ajustement de précision, l'optimisation s'effectue en modifiant d'autres paramètres de commande.

## Claims

1. Method for setting an exhaust gas recirculation rate (EGR) of an internal combustion engine, in which an exhaust gas recirculation valve (ERV) is adjusted by means of an actuating element which acts on said exhaust gas recirculation valve as a function of the demands on the internal combustion engine,
**characterized**
**in that** the exhaust gas recirculation rate (EGR) is approximately regulated in steps to a target value in a manner known per se,
**in that**, after the approximate regulation, an accurate regulation is carried out in which it is determined whether the exhaust gas recirculation rate (EGR) has reached a predetermined accuracy, and if the predetermined accuracy has not been reached after the approximate regulation, an accurate setting takes place by means of altering the intake and/or exhaust valve function of a respective combustion chamber (BR).

2. Method according to Claim 1,
**characterized**
**in that** the accurate setting takes place on the basis of engine control data which is evaluated in a control device.

3. Method according to Claim 2,
**characterized**
**in that** the engine control data comprises recorded exhaust gas measurement data.

4. Method according to one of the preceding claims,
**characterized**
**in that** the demands comprise an optimization of torque, of an exhaust gas composition or of a combination of these, and in that, in the event of a deviation from the optimum torque and/or from the optimum exhaust gas composition as a result of the accurate setting the optimization takes place by variation of other control parameters.
